# EUROPEAN PATENT APPLICATION

(11) **EP 2 073 538 A1**
(43) Date of publication of application: **24.06.2009**
(21) Application number: 07829507.8
(22) Date of filing: 10.10.2007
(51) Int. Cl.: H04N 5/76, H04M 1/00, H04N 5/44, H04N 7/173

(54) **MOBILE COMMUNICATION TERMINAL**

(30) Priority: 13.10.2006 JP 2006279455
(71) Applicant: Sharp Kabushiki Kaisha, Osaka-shi, Osaka 545-8522 (JP)
(72) Inventor: OKUDA, Kei, Hiroshima 739-0014 (JP); MOHRI, Takayuki, Hiroshima 739-0313 (JP)
(74) Representative: Müller - Hoffmann & Partner
(86) International application number: PCT/JP2007/069769
(87) International publication number: WO 2008/047647

(57) **Abstract**

There is provided a mobile communication terminal that can start video recording at a preliminarily specified time even if an application inexecutable simultaneously with a video recording operation for a TV broadcast is in execution.

The mobile communication terminal includes: a TV video recording/reproduction processing part 33 adapted to video-record a TV broadcast; an application program executing part 34 adapted to execute on the basis of a user operation an application program that is inexecutable simultaneously with a video recording operation for the TV broadcast; a flag storing part 36 adapted to store a reservation video recording priority flag; a reservation video recording priority specifying part 35 adapted to enable the reservation video recording priority flag on the basis of a user operation; and a reservation video recording controlling part 31 adapted to specify a video recording start time on the basis of a user operation, and reproduce a video recording start signal. The TV video recording/reproduction processing part 33 terminates the application program in execution on the basis of the reservation video recording priority flag and the video recording start signal, and starts the video recording of the TV broadcast at the video recording start time.

## Description

### TECHNICAL FIELD

The present invention relates to a mobile communication terminal, and more particularly, to improvement of a mobile communication terminal that enables a TV broadcast to be watched, and can start video recording of a TV broadcast at a preliminarily specified time.

### BACKGROUND ART

In recent years, cellular phones enabling a broadcast program to be watched by receiving a TV (Television) broadcast wave have been commercialized, which has been becoming a topic of conversation. This sort of cellular phone is provided with a TV tuner corresponding to one-segment service of a digital terrestrial broadcast, and receives one segment of a transport stream to reproduce a TV broadcast. More recently, there has been proposed a cellular phone provided with a function of not only reproducing a TV broadcast but automatically starting to reproduce a TV broadcast at a time preliminarily specified by a user, i.e., a so-called reservation watching function; or a video recording function for recording a TV broadcast in a memory card or the like (e.g., Patent document 1).
Patent document 1: Japanese Unexamined Patent Publication No. 2006-20287

### DISCLOSURE OF THE INVENTION

### PROBLEM TO BE SOLVED BY THE INVENTION

In general, an application program for embodying a function involving moving picture processing, such as the recording function for a TV broadcast, has a large processing load upon activation or during execution as compared with the other application programs. For this reason, a video recording operation for a TV broadcast and another application for processing moving picture data are often simultaneously inexecutable. In the conventional cellular phone as described above, if a TV broadcast is video-recorded during execution of an application program that should not be executed simultaneously with such video recording operation, the application program in execution should be terminated by a user operation. For this reason, there arises a problem that even if a user attempts to automatically start video recording of a TV broadcast at a time preliminarily specified by the user, the video recording operation is not started if the application program is in execution, and therefore, in some cases, the TV broadcast cannot be video-recorded.

The present invention has been made in consideration of the above situations, and has an object to provide a mobile communication terminal capable of starting a video recording operation for a TV broadcast to video-record the TV broadcast at a preliminarily specified time even if an application program inexecutable simultaneously with the video recording operation is in execution. In particular, the present invention has an object to provide a mobile communication terminal in which a user can select whether or not to video-record a TV broadcast in priority to execution of an application program.

### MEANS ADAPTED TO SOLVE PROBLEMS

A mobile communication terminal according to a first aspect of the present invention enables a TV broadcast to be watched; can start video recording of the TV broadcast at a preliminarily specified time; and is configured to include: TV broadcast video recording means adapted to video-record the TV broadcast; application program executing means adapted to execute an application program on a basis of a user operation, the application program being inexecutable simultaneously with a video recording operation for the TV broadcast; flag storing means adapted to store a reservation video recording priority flag for video-recording the TV broadcast in priority to the execution of the application program; reservation video recording priority specifying means adapted to enable the reservation video recording priority flag on a basis of a user operation; and reservation video recording controlling means adapted to specify a video recording start time on a basis of a user operation, and produce a video recording start signal on a basis of the video recording start time, wherein the TV broadcast video recording means terminates the application program in execution on a basis of the reservation video recording priority flag and the video recording start signal, and starts the video recording of the TV broadcast at the video recording start time.

In the mobile communication terminal, on the basis of the video recording start signal that is generated on the basis of the video recording start time, and the reservation video recording priority flag for video-recording the TV broadcast in priority to the execution of the application program that is inexecutable simultaneously with the video recording operation for the TV broadcast, the application program in execution is terminated, and then the video recording of the TV broadcast is started. For example, an application program for embodying a TV broadcast video recording function or a web browser function for browsing websites should process moving picture data, and therefore has a large processing load upon activation or during execution as compared with the other application programs. For this reason, the video recording operation for a TV broadcast and the application program processing moving picture data, such as a web browser, are often simultaneously inexecutable. The mobile communication terminal according to the present invention terminates an application program in execution and then automatically starts video recording of a TV broadcast on the basis of the above-described configuration, and can therefore start the video recording operation at the video recording start time to video-record the TV broadcast even if the application program inexecutable simultaneously with the video recording operation is in execution. At this time, the video recording operation is started on the basis of the reservation video recording priority flag enabled by a user operation, and therefore the user can select whether or not to video-record the TV broadcast in priority to the execution of the application program.

A mobile communication terminal according to a second aspect of the present invention is, in addition to the above configuration, configured such that if the reservation video recording priority flag is enabled, the TV broadcast video recording means terminates the application program a predetermined time period before the video recording start time, and starts the video recording of the TV broadcast at the video recording start time, or if the reservation video recording priority flag is disabled, the TV broadcast video recording means starts the video recording of the TV broadcast upon termination of the application program in execution.

A mobile communication terminal according to a third aspect of the present invention is, in addition to the above configuration, configured such that the TV broadcast video recording means terminates the application program the predetermined time period before the video recording start time, and reproduces the TV broadcast. According to such a configuration, the reproduction of the TV broadcast is started upon termination of the application program the predetermined time period before the video recording start time, and therefore the application program can be suppressed from being activated during a time period between the termination of the program and the start of the video recording.

A mobile communication terminal according to a fourth aspect of the present invention includes, in addition to the above configuration, reservation video recording notifying means adapted to notify start of the video recording a predetermined time period before the video recording start time, and is configured such that the TV broadcast video recording means starts reproduction of the TV broadcast on a basis of a termination operation for the application program in execution performed from the notification of the start of the video recording by the reservation video recording notifying means to the video recording start time. In the mobile communication terminal, in the case where the termination operation for terminating the application program in execution is performed during a time period between the notification of the start of the video recording and the video recording start time, the reproduction of the TV broadcast is started on the basis of the termination operation. According to such a configuration, the reproduction of the TV broadcast is started if the application program is terminated during the time period between the notification of the start of the video recording and the video recording start time, and therefore the application program can be suppressed from being activated during the time period between the termination of the program and the start of the video recording.

A mobile communication terminal according to a fifth aspect of the present invention is, in addition to the above configuration, configured such that if the application program is not in execution, the TV broadcast video recording means starts the reproduction of the TV broadcast upon the notification of the start of the video recording by the reservation video recording notifying means. According to such a configuration, if the application program is not in execution, the reproduction of the TV broadcast is started upon the notification of the start of the video recording, and therefore the application program can be suppressed from being activated during a time period between the notification of the start of the video recording and a time when the video recording is actually started.

A mobile communication terminal according to a sixth aspect of the present invention is, in addition to the above configuration, configured such that a time of notifying of the start of the video recording by the reservation video recording notifying means is before a time when by the TV broadcast video recording means, the application program in execution is terminated and the reproduction of the TV broadcast is started.

### EFFECT OF THE INVENTION

According to a mobile communication terminal of the present invention, an application program in execution is terminated and then video recording of a TV broadcast is automatically started, so that even if an application program inexecutable simultaneously with the video recording operation is in execution, the video recording operation can be started at a video recording start time to video-record the TV broadcast. At this time, the video recording operation is started on the basis of a reservation video recording priority flag enabled by a user operation, and therefore the user can select whether or not to video-record the TV broadcast in priority to the execution of the application program.

### BEST MODE FOR CARRYING OUT THE INVENTION

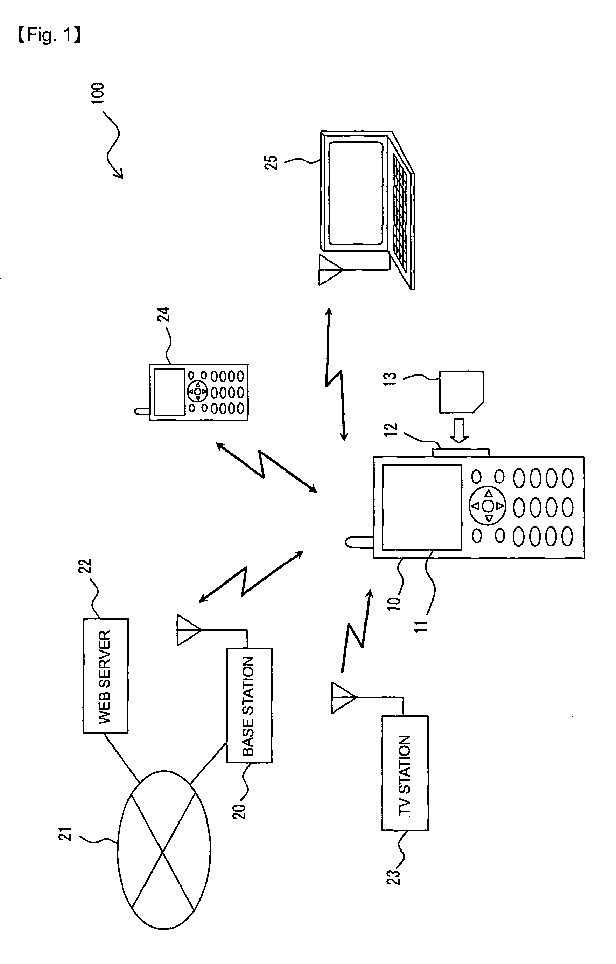

Fig. 1 is a diagram illustrating a configuration example of a communication system 100 including a cellular phone 10 according to an embodiment of the present invention. The communication system 100 includes the cellular phone 10, a base station 20, a communication network 21, a web server 22, a TV station 23, a mobile terminal 24, and a personal computer 25.

The communication network 21 is one including: a mobile communication network connected with the base station 20; and a computer network connected to the mobile communication network through a gateway. As the computer network herein, the Internet or LAN (Local Area Network) is envisaged.

The cellular phone 10 is a communication terminal connectable to the communication network 21 through the base station 20, and can communicate with or transmit/receive an electronic mail to/from the other cellular phone through the communication network 21. The cellular phone 10 is provided with a display 11, and a card slot 12 for containing a memory card 13. The memory card 13 is a detachable recording medium including a nonvolatile semiconductor memory element.

The web server 22 is an information processor connected to the communication network 21, and provides various pieces of content on websites.

The base station 20 is a management apparatus for managing the cellular phone 10 within a wireless service area, and connected to the communication network 21. The cellular phone 10 can access the web server 22 on the communication network 21 through such base station 20 if it specifies an address to request a connection, and browse the websites on the web server 22.

The TV station 23 is a transmission apparatus for transmitting a TV broadcast wave, and uses a preliminarily assigned frequency band to provide a broadcast program. The cellular phone 10 can receive such TV broadcast wave to reproduce a TV broadcast, and enables the broadcast program provided by the TV station 23 to be watched.

The mobile terminal 24 is a communication terminal that uses infrared light to be able to make a short distance communication with the cellular phone 10, and can directly transmit/receive data to/from the cellular phone 10 without through the base station 20. The personal computer 25 is an information processing terminal that uses a radio wave for short distance communication to be able to communicate with the cellular phone 10.

The cellular phone 10 includes, in addition to a web browser function for obtaining the pieces of content provided on the websites, and a TV reproduction function for reproducing a TV broadcast, a reservation video recording function for recording a TV broadcast in the memory card 13 at a time preliminarily specified by a user.

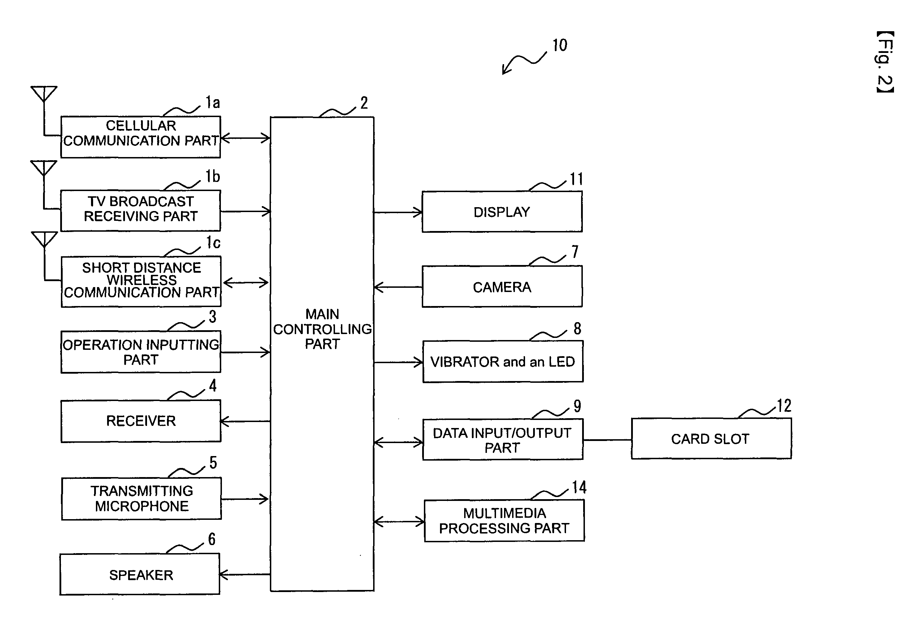

Fig. 2 is a block diagram illustrating an example of a schematic configuration of the cellular phone 10 illustrated in Fig. 1. The cellular phone 10 includes a cellular communication part 1a, a TV broadcast receiving part 1b, a short distance wireless communication part 1c, a main controlling part 2, an operation inputting part 3, a receiver 4, a transmitting microphone 5, a speaker 6, a camera 7, a vibrator and an LED 8, a data input/output part 9, a display 11, a card slot 12, and a multimedia processing part 14.

The main controlling part 2 includes a processor for controlling operations of the cellular communication part 1a, the TV broadcast receiving part 1b, the short distance wireless communication part 1c, the operation inputting part 3, the receiver 4, the transmitting microphone 5, the speaker 6, the camera 7, the vibrator and the LED 8, the data input/output part 9, and the display 11.

The cellular communication part 1a is mobile communication processing means adapted to transmit/receive a radio wave to/from the base station 20 through a communication antenna.

The TV broadcast receiving part 1b is a TV tuner for performing reception processing of a TV broadcast wave from the TV station 23 through a TV broadcast receiving antenna. The TV broadcast receiving part 1b generates received data including TV images, TV voice, and attribute information. In general, the TV broadcast wave transmitted from the TV station 23 includes an analog broadcast wave corresponding to an analog broadcast and a digital broadcast wave corresponding to a digital broadcast. The digital broadcast wave received by the TV broadcast receiving part 1b is a one-segment broadcast wave for cellular phones, which is assigned to a certain band of a digital high-vision broadcast wave, and includes, in addition to the TV images and the TV voice, character information such as captions corresponding to the TV images and associated articles, voice information such as a presence or an absence of sub voice, channel information corresponding to a frequency band of a received radio wave, and the like, as the attribute information.

In the digital broadcast, a band for one channel is divided into thirteen segments of which twelve segments are assigned for service for home TV receivers, and remaining one segment is assigned for service for mobile terminals.

In the reception processing of a TV broadcast wave by the TV broadcast receiving part 1b, a baseband signal included in a specific frequency band corresponding to a channel selected by a user is extracted and outputted as received data. On the basis of the received data, TV images are displayed on the display 11, and TV voice corresponding to the TV images is outputted from the speaker 6.

The short distance wireless communication part 1c is short distance data communication processing means adapted to transmit/receive data to/from the mobile terminal 24 or the personal computer 25 through the short distance communication antenna or an infrared transceiver.

The operation inputting part 3 performs an operation for generating an input signal on the basis of an operation of operation keys. The receiver 4 is an output device for a voice signal upon telephone conversation, and the transmitting microphone 5 is a voice input device. The speaker 6 is an output device for a ringtone or TV voice. The display 11 is an image data output device having a display screen, and as the display 11, an LCD (Liquid Crystal Display) is used, for example.

The camera 7 is an imaging device for photographing a subject to generate image data. The vibrator and the LED 8 are notifying means adapted to notify an incoming call or start of video recording with use of vibration or light, and include a vibrator and LED (Light Emitting Diode). The vibrator is a vibration generator that rotates an eccentrically arranged metal piece or the like to generate vibration.

The data input/output part 9 is an external interface for inputting/outputting data to/from the memory card 13 contained in the card slot 12. We herein assume that received data from a TV broadcast wave is written in the memory card 13 by the data input/output part 9 upon video recording of a TV broadcast.

The multimedia processing part 14 includes a semiconductor chip for performing expansion processing and compression processing of communication data, and received data from a TV broadcast wave. In the multimedia processing part 14, the processing for expanding or compressing TV images and TV voice is performed upon reproduction or video recording of a TV broadcast.

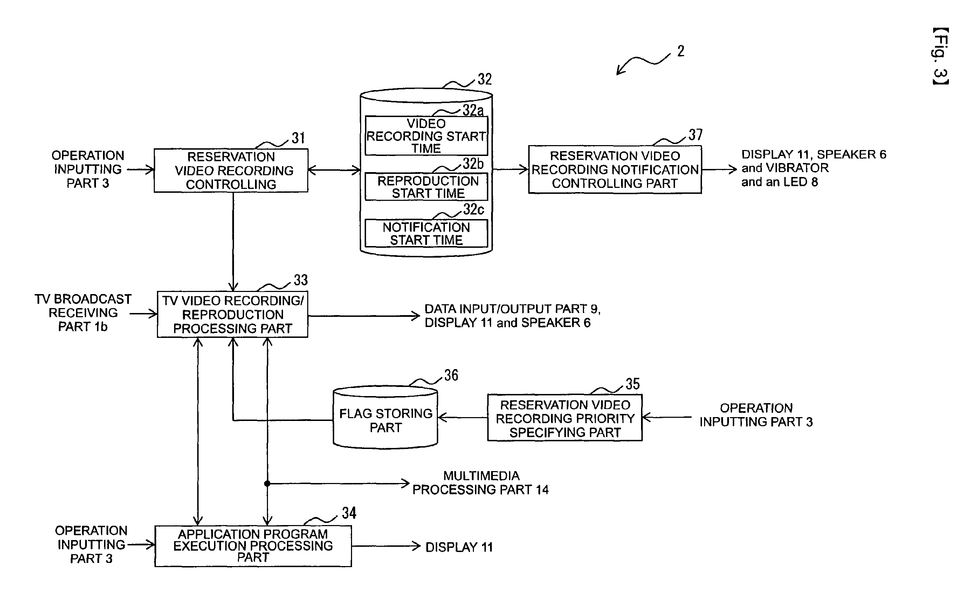

Fig. 3 is a block diagram illustrating a configuration example of a main part of the cellular phone 10 illustrated in Fig. 2, in which an example of a functional configuration inside the main controlling part 2 is illustrated. The main controlling part 2 includes a reservation video recording controlling part 31, a time information storing part 32, a TV video recording/reproduction processing part 33, an application program execution processing part 34, a reservation video recording priority specifying part 35, a flag storing part 36, and a reservation video recording notification controlling part 37. The reservation video recording controlling part 31 performs control for specifying a video recording start time on the basis of an input signal from the operation inputting part 3, and generating a video recording start signal on the basis of the video recording start time.

The video recording start time is specified by, for example, directly inputting time information, or selecting a desired broadcast program with use of an EPG. The EPG (Electronic Program Guide) is attribute information included in a transport stream of a one-segment broadcast wave, and includes a channel number, a channel name, a program name, a program start time, a program end time, and the like. We herein assume that if the video recording start time is specified, a reproduction start time of a TV broadcast and a notification start time for reservation video recording are determined by the reservation video recording controlling part 31 on the basis of the video recording start time, and these pieces of time information 32a to 32c are stored in the time information storing part 32.

The reproduction start time of a TV broadcast is the time information for starting reproduction of the TV broadcast prior to the start of reservation video recording of the TV broadcast. The notification start time for reservation video recording is the time information for notifying the start of the reservation video recording of the TV broadcast in advance, and determined as a time before the reproduction start time. Specifically, given that the notification start time is represented by t₁, the reproduction start time by t₂, and the video recording start time by t₃, the notification start time t₁ is determined as a time a predetermined time period T1 before the video recording start time t₃. Also, the reproduction start time t₂ is determined as a time a predetermined time period T2 before the video recording start time t₃, where T2 < T1. That is, the reproduction start time t₂ is a time between the notification start time t₁ and the video recording start time t₃.

The TV video recording/reproduction processing part 33 reproduces a TV broadcast on the basis of received data from the TV broadcast receiving part 1b, and performs processing for video-recording the TV broadcast. Upon reproduction and video recording of the TV broadcast, the expansion processing and compression processing of moving picture data based on a data compression standard such as MPEG (Moving Picture Experts Group) are performed in the multimedia processing part 14. Upon reproduction of the TV broadcast, the TV images and the TV voice are respectively outputted to the display 11 and the speaker 6, whereas upon video recording, the image data and the voice data are outputted to the data input/output part 9.

The application program execution processing part 34 performs, on the basis of an input signal from the operation inputting part 3, processing for executing an application program that is inexecutable simultaneously with the video recording operation for the TV broadcast. For example, an application program for embodying the web browser function for browsing the websites on the web server 22 is activated by a user operation, and image data is outputted to the display 11. The expansion processing and the compression processing of communication data and moving picture data by the execution of the application program are performed in the multimedia processing part 14.

The reservation video recording priority specifying part 35 performs processing for enabling a reservation video recording priority flag on the basis of an input signal from the operation inputting part 3. The reservation video recording priority flag is a flag for video-recording a TV broadcast in priority to execution of the other application program, and stored in the flag storing part 36.

In general, an application program for embodying a video recording function for a TV program or a web browser function should process moving picture data, and therefore as compared with the other application programs, has a large processing load upon activation or during execution. For this reason, a video recording operation for a TV broadcast, and the application program processing moving picture data, such as a web browser, are often simultaneously inexecutable. In the present embodiment, to reduce a manufacturing cost of the cellular phone 10, the multimedia processing part 14 is made to perform the processing of moving picture data. The multimedia processing part 14 is configured to be unable to simultaneously activate two or more application programs involving the processing of the movie picture data. For this reason, the multimedia processing part 14 can activate an application program involving the movie picture processing only after terminating the other application program in execution.

The application programs inexecutable simultaneously with a video recording operation for a TV broadcast include an imaging function by the camera 7 in addition to a communication function such as the web browser. The reservation video recording priority flag is adapted to be a flag for prioritizing the video recording of a TV broadcast over the execution of an application program that involves the movie picture data processing and is inexecutable simultaneously with the video recording operation for the TV broadcast.

The TV video recording/reproduction processing part 33 terminates an application program in execution on the basis of the reservation video recording priority flag and the video recording start signal from the reservation video recording controlling part 31, and performs processing for starting the video recording of a TV broadcast at the video recording start time. Specifically, if the reservation video recording priority flag is enabled, the application program is forcibly terminated at the reproduction start time t₂ that is the predetermined time period T2 before the video recording start time t₃, and the video recording of the TV broadcast is automatically started at the video recording start time t₃. On the other hand, if the reservation video recording priority flag is disabled, the video recording of the TV broadcast is started upon termination of the application program in execution. Note that the term "the application program is in execution" means that the program is in operation between activation and termination of the program.

We herein assume that the TV broadcast is reproduced at least during the video recording of the TV broadcast. We also assume that if the reservation video recording priority flag is enabled, the reproduction of the TV broadcast is started immediately after termination of the application program in execution. Further, we assume that if the reservation video recording priority flag is disabled, and the application program is terminated by a user operation before the video recording start time t₃, the reproduction of the TV broadcast is started immediately after the termination of the application program. Still further, we assume that if the application program is terminated by a user operation after the video recording start time t₃, the video recording and reproduction of the TV broadcast are started immediately after the termination of the application program.

We here assume that in the case of an application program executable simultaneously with a video recording operation for a TV broadcast, reproduction and video recording of the TV broadcast are started at the reproduction start time t₂ and video recording start time t₃, respectively, without termination of the application program in execution, regardless of the reservation video recording priority flag.

We also assume that during telephone conversation, or data transfer using the communication function, video recording and reproduction of a TV broadcast are not performed, and even if the reservation video recording priority flag is enabled, the video recording of the TV broadcast is started upon completion of the telephone conversation or data transfer.

The reservation video recording notification controlling part 37 controls, on the basis of the time information 32c, the display 11, the speaker 6, and the vibrator and the LED 8 to notify the start of video recording at the notification start time t₁ that is the predetermined time period T1 before the video recording start time t₃. Based on this notification control, a message indicating the start of video recording is displayed on the display 11, alarm sound is outputted from the speaker 6, the vibrator vibrates, or the LED is turned on.

The TV video recording/reproduction processing part 33 performs, on the basis of a termination operation for an application program in execution performed during a time period between the notification of the start of video recording by the reservation video recording notification controlling part 37 and the video recording start time t₃, processing for starting the reproduction of the TV broadcast. Also, if the application program is not in execution, the processing for starting the reproduction of the TV broadcast is performed upon the notification of the start of video recording by the reservation video recording notification controlling part 37.

We here assume that the video recording of the TV broadcast is terminated when a user-specified video recording termination time comes, or the user-specified broadcast program being video-recorded ends.

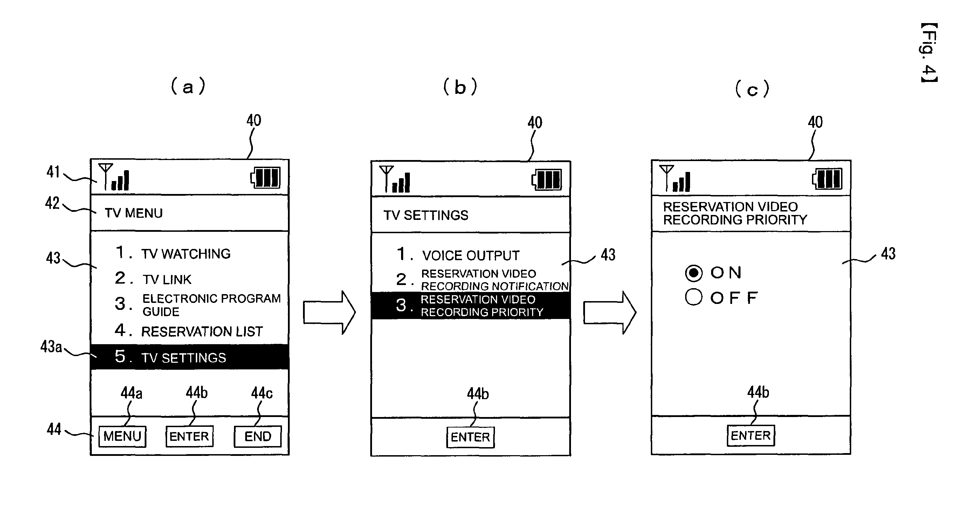

Figs. 4 (a) to (c) are transition diagrams illustrating an example of operations in the cellular phone 10 of Fig. 2, in which a setting screen 40 upon enabling of the reservation video recording priority flag is illustrated. Fig. 4 (a) illustrates a menu related to TV broadcast watching; Fig. 4 (b) illustrates a TV setting menu; and Fig. 4 (c) illustrates a selection menu for specifying on or off of reservation video recording priority.

The setting screen 40 is a screen display to be displayed on the display screen of the display 11, and includes a picto display area 41, a title display area 42, a menu display area 43, and a guide key display area 44. The picto display area 41 is a display area for displaying pictograms that are different depending on an operating state, and arranged in an upper part of the screen. In the diagram, an antenna picto indicating an incoming signal strength, and a battery picto indicating a remaining battery level are arranged in the picto display area 41.

The title display area 42 is a display area for displaying a title related to setting content, and arranged below the picto display area 41. The menu display area 43 is a display area for displaying selectable menu icons, and arranged between the title display area 42 and the guide key display area 44. A menu icon in a selective state is displayed in focus, for example, displayed inverted, and by operating direction keys or number keys, a focus position can be moved.

The guide key display area 44 is a display area for displaying icons indicating assignments of functions assigned to operation keys, and arranged in a lower part of the screen. In the diagram, a menu icon 44a, a decision (enter) icon 44b, and an end icon 44c are arranged in the guide key display area 44.

The menu icon 44a is an icon for terminating the setting of a TV menu to switch to a screen display of a main menu, and arranged on a left hand side. The decision (enter) icon 44b is an icon for specifying a menu icon in a selective state to switch to a screen display of a setting menu related to a corresponding menu, and arranged in the middle. The end icon 44c is an icon for terminating the setting of the TV menu to switch to a standby display, and arranged on a right hand side.

In the menu related to the TV broadcast watching, a title "TV menu" is displayed in the title display area 42, and in the menu display area 43, menu icons "1. TV watching", "2. TV link", "3. Electronic program guide", "4. Reservation list", and "5. TV settings" are respectively arranged.

The menu icon "1. TV watching" is an icon for starting to reproduce a TV broadcast, or resuming an image display if the display of the TV image is interrupted. The menu icon "2. TV link" is an icon for browsing web sites related to a TV broadcast being watched, and "3. Electronic program guide" is an icon for displaying information included in the EPG. "4. Reservation list" is an icon for displaying time information on registered reservation video recording or reservation watching, and "5. TV settings" is an icon for displaying a setting menu related to reproduction and video recording of a TV broadcast.

In this example, the menu icon "5. TV settings" is in a selective state, and if the decision (enter) icon 44b is operated in this state, the current display can be switched to a screen display of the setting menu related to reproduction and video recording of a TV broadcast.

In the setting menu related to reproduction and video recording of a TV broadcast, a title "TV settings" is displayed in the title display area 42, and in the menu display area 43, menu icons "1. Voice output", "2. Reservation video recording notification", and "3. Reservation video recording priority" are respectively arranged. The menu icon "1. Voice output" is an icon for specifying a volume level of TV voice, and sub voice.

The menu icon "2. Reservation video recording notification" is an icon for specifying the notification start time t₁ for notification of the start of video recording, alarm sound duration, and on or off of the alarm sound, the vibrator, and the LED. "3. Reservation video recording priority" is an icon for enabling the reservation video recording priority flag.

In this example, the menu icon "3. Reservation video recording priority" is in a selective state, and if the decision icon 44b is operated in this state, the current display can be switched to a screen display of the selection menu for specifying on or off of the reservation video recording priority.

In the selection menu for specifying on or off of the reservation video recording priority, a title "Reservation video recording priority" is displayed in the title display area 42, and in the menu display area 43, selection icons "ON" and "OFF" are respectively arranged. In this example, the selection icon "ON" is in a selective state, and if the decision icon 44b is operated in this state, the reservation video recording priority flag can be enabled.

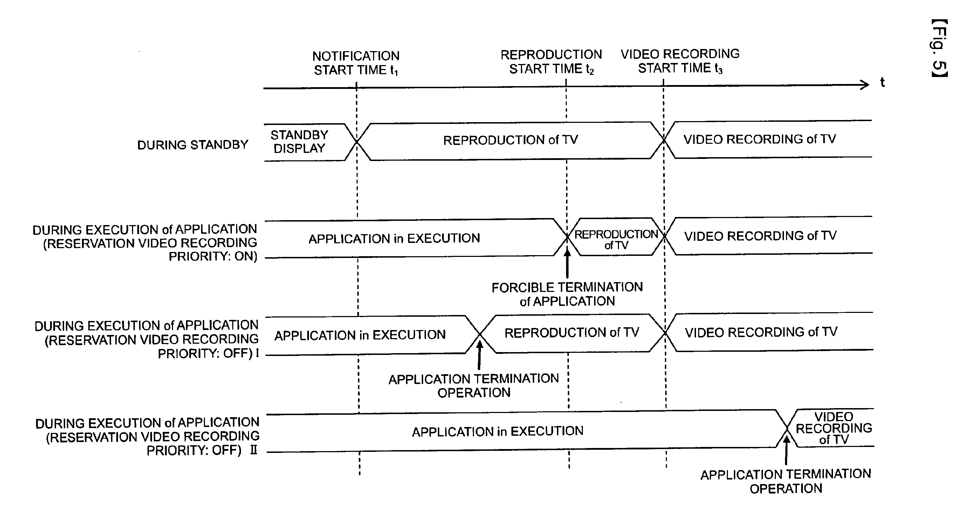

Fig. 5 is a timing chart illustrating an example of the operations in the cellular phone 10 of Fig. 2, in which an operating situation upon start of reservation video recording is illustrated. In this example, a state where an application program inexecutable simultaneously with a video recording operation for a TV broadcast is not at least activated is defined as a standby state, and a screen display in the standby state is defined as a standby display. In the case where such standby display is displayed, when the notification start time t₁ comes, the start of video recording is notified; then the standby display is terminated; and reproduction of a TV broadcast is started. Subsequently, when the video recording start time t₃ comes, the video recording of the TV broadcast is started.

In the case where the application program inexecutable simultaneously with the video recording operation for a TV broadcast is in execution, when the notification start time t₁ comes, the start of video recording is notified. Then, if the reservation video recording priority is ON, the application is forcibly terminated at the reproduction start time t₂, and reproduction of a TV broadcast is started. Subsequently, when the video recording start time t₃ comes, video recording of the TV broadcast is started. That is, in this case, the application is forcibly terminated between the notification start time t₁ and the video recording start time t₃, and then the reproduction of the TV broadcast is started.

On the other hand, if the reservation video recording priority is OFF, the application is not forcibly terminated, and at the time of an application termination operation by a user, the reproduction or video recording of the TV broadcast is started. In this case, if the application termination operation is performed before the video recording start time t₃, the reproduction of the TV broadcast is started immediately after the termination of the application, and then at the video recording start time t₃, the video recording of the TV broadcast is started. On the other hand, if the application termination operation is performed after the video recording start time t₃, the video recording of the TV broadcast is started immediately after the termination of the application.

During the standby display, the user is likely not to operate the cellular phone 10, and in such a case, by starting the reproduction of the TV broadcast earlier, the other application can be suppressed from being activated. On the other hand, during execution of the application, by continuing the execution of the application from the notification of the start of video recording to the reproduction start time, the user can continue to operate the application. Also, when the application termination operation is performed before the reproduction start time t₂, the other application can be suppressed from being activated before the reproduction start time t₂ by starting the reproduction of the TV broadcast immediately after the termination of the application enables.

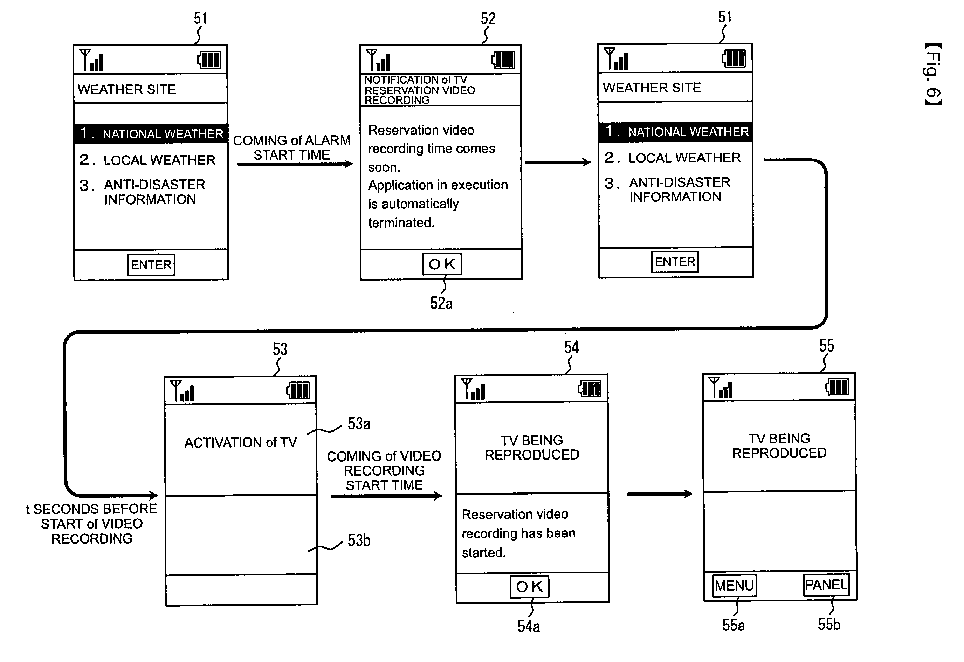

Fig. 6 is a transition diagram illustrating an example of the operations in the cellular phone 10 of Fig. 2, in which the situation of a screen display upon start of reservation video recording during website browsing is illustrated. If the alarm start time (notification start time t₁) comes during display of a browsing screen 51 for the website "Weather site", a notification screen 52 is displayed. The notification screen 52 is a screen display for displaying a message indicating that reservation video recording is soon started. If an OK icon 52a arranged in the lower part of the screen, the current screen can be recovered to the original browsing screen 51.

Then, t seconds before the start of video recording, for example, 30 seconds before, the web browser for browsing the website is forcibly terminated, and reproduction of a TV broadcast is started to display a reproduction screen 53. The reproduction screen 53 for the TV broadcast includes a display area 53a for displaying TV images, and another display area 53b for displaying attribute information such as a caption. In this example, the display areas 53a and 53b are respectively arranged in the upper and lower parts.

Subsequently, when the video recording start time t₃ comes, a notification screen 54 for notifying the start of reservation video recording is displayed, and video recording of the TV broadcast is started. The notification screen 54 is a screen display for displaying a message indicating that the reservation video recording has been started. The message is displayed in the display area 53b, and if an OK icon 54a in the lowest part of the screen is operated, a video recording/reproduction screen 55 for the TV broadcast can be displayed.

The video recording/reproduction screen 55 includes a display area for displaying the TV images being reproduced, and another display area for displaying attribute information such as a caption, and in the lowest part of the screen, a menu icon 55a and panel icon 55b are arranged. The menu icon 55a is an icon for displaying the main menu, and arranged on the left hand side. The panel icon 55b is an icon for displaying the menu related to the TV broadcast watching, and arranged on the right hand side.

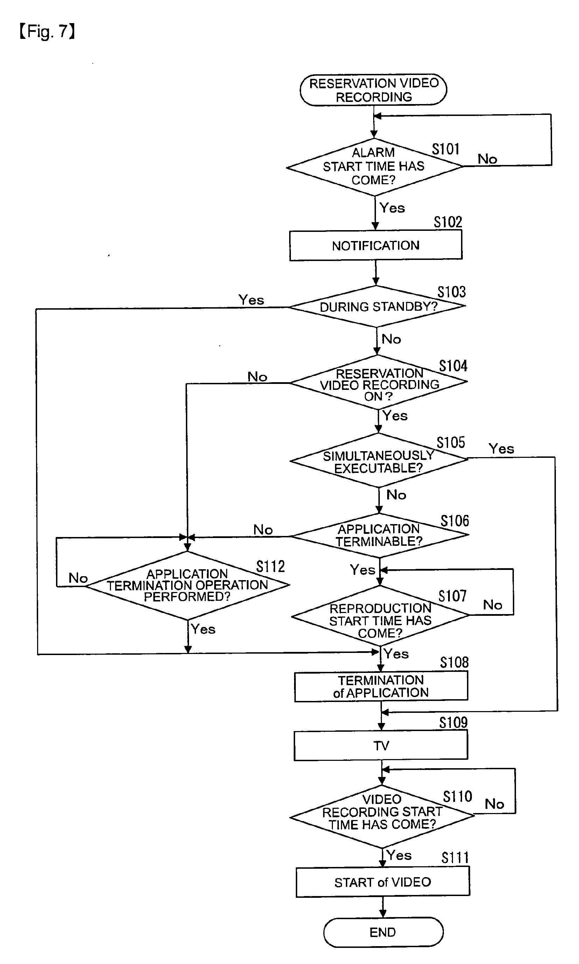

A series of Steps S101 to S112 in Fig. 7 is a flowchart illustrating an example of reservation video recording operations in the cellular phone 10 of Fig. 2. First, when the alarm start time comes, the reservation video recording notification controlling part 37 displays a message indicating the start of video recording, and sounds the alarm (Steps S101 and S102). At this time, if the standby display is displayed, the TV video recording/reproduction processing part 33 immediately terminates the standby display, and starts to reproduce a TV broadcast (Steps S103, S108, and S109). On the other hand, if the standby display is not displayed, different processing is performed depending on whether or not the reservation video recording priority is ON.

That is, if the reservation video recording priority is not ON, an application in execution is terminated on the basis of the application termination operation by a user, and reproduction of the TV broadcast is started (Steps S104, S112, S108, and S109). On the other hand, if the reservation video recording priority is ON, different processing is performed depending on whether or not the application in execution is executable simultaneously with a video recording operation for the TV broadcast.

At this time, if the application in execution is executable simultaneously with the video recording operation for the TV broadcast, the reproduction of the TV broadcast is started without termination of the application (Steps S105 and S109). On the other hand, if the application in execution is inexecutable simultaneously with the video recording operation for the TV broadcast, different processing is performed depending on whether or not the application is terminable.

If the application is not terminable, the application in execution is terminated on the basis of the application termination operation by the user, and the reproduction of the TV broadcast is started (Steps S106, S112, S108, and S109). On the other hand, if the application is terminable, the application in execution is terminated on the basis of coming of the reproduction start time, and the reproduction of the TV broadcast is started (Steps S107 to S109).

Then, when the video recording start time comes after the start of the reproduction of the TV broadcast, the TV video recording/reproduction processing part 33 starts to video-record the TV broadcast (Steps S100 and S111).

According to the present embodiment, an application program in execution is terminated and video recording of a TV broadcast is automatically started, so that even if an application program inexecutable simultaneously with a video recording operation is in execution, the video recording operation can be started at the video recording start time to video-record the TV broadcast. At this time, the video recording operation is started on the basis of the reservation video recording priority flag enabled by a user operation, and therefore the user can select whether or not to video-record the TV broadcast in priority to the execution of the application program.

Also, reproduction of the TV broadcast is started when the application program is terminated a predetermined time period before the video recording start time, and therefore the application program can be suppressed from being activated during a time period between the termination of the program and the start of video recording. Further, the reproduction of the TV broadcast is started when the application program is terminated during a time period between the notification of the start of video recording and the video recording start time, and therefore the application program can be suppressed from being activated during the time period between the termination of the program and the start of video recording. Still further, if the application is not in execution, the reproduction of the TV broadcast is started upon notification of the start of video recording, and therefore if the video recording of the TV broadcast is started during the standby display, the application program can be suppressed from being activated until the video recording is actually started.

Note that, in the present embodiment, there is described an example where a TV broadcast is reproduced and video-recorded on the basis of received data from a TV broadcast wave; however, the present invention is not limited to this. For example, the present invention may also be applied to a cellular phone that obtains TV images and TV voice provided by the web server 22 through the communication network 21, and on the basis of the obtained communication data, reproduces and video-records a TV broadcast.

Also, in the present description, the problem is described as follows: an application program involving moving picture processing has a large processing load, and is therefore often inexecutable simultaneously with a video recording operation for a TV broadcast; however, this is only an example, and an application program inexecutable simultaneously with the video recording operation for a TV broadcast is not limited to that involving the moving picture processing.

As the application program inexecutable simultaneously with a video recording operation for a TV broadcast, there is considered a program that executes processing of voice data associated with telephone conversation, communication data processing, and processing for writing and reading data to and from an external storage device such as the memory card 13, in addition to a program involving expansion or compression processing of moving picture data, like video recording processing for a TV broadcast. That is, an application program commonly using hardware such as the multimedia processing part 14 or memory card 13 or software is the program inexecutable simultaneously with the video recording operation for a TV broadcast, and the present invention can be applied to such an application program.

This application claims priority from the Japanese patent application (Japanese Patent Application No. 2006-279455) filed on October 13, 2006 under the Paris Convention, and the entire content of the patent application is incorporated herein by reference.

### BRIEF DESCRIPTION OF THE DRAWINGS

[Fig. 1] Fig. 1 is a diagram illustrating a configuration example of a communication system 100 including a cellular phone 10 according to an embodiment of the present invention.
[Fig. 2] Fig. 2 is a block diagram illustrating an example of a schematic configuration of the cellular phone 10 illustrated in Fig. 1.
[Fig. 3] Fig. 3 is a block diagram illustrating a configuration example of a main part of the cellular phone 10 illustrated in Fig. 2, in which an example of a functional configuration inside a main controlling part 2 is illustrated.
[Fig. 4] Fig. 4 is a transition diagram illustrating an example of operations in the cellular phone 10 of Fig. 2, in which a setting screen 40 upon enabling of a reservation video recording priority flag is illustrated.
[Fig. 5] Fig. 5 is a timing chart illustrating an example of the operations in the cellular phone 10 of Fig. 2, in which an operating situation upon start of reservation video recording is illustrated.
[Fig. 6] Fig. 6 is a transition diagram illustrating an example of the operations in the cellular phone 10 of Fig. 2, in which the situation of a screen display upon the start of the reservation video recording during website browsing is illustrated.
[Fig. 7] Fig. 7 is a flowchart illustrating an example of a reservation video recording operation in the cellular phone 10 of Fig. 2.

### DESCRIPTION OF REFERENCE NUMERALS

- 1a: Cellular communication part
- 1b: TV broadcast receiving part
- 1c: Short distance wireless communication part
- 2: Main controlling part
- 3: Operation inputting part
- 4: Receiver
- 5: Transmitting microphone
- 6: Speaker
- 7: Camera
- 8: Vibrator and an LED
- 9: Data input/output part
- 10: Cellular phone
- 11: Display
- 12: Card slot
- 13: Memory Card
- 14: Multimedia processing part
- 20: Base station
- 21: Communication network
- 22: Web server
- 23: TV station
- 24: Mobile terminal
- 25: Personal computer
- 31: Reservation video recording controlling part
- 32: Time information storing part
- 33: TV video recording/reproduction processing part
- 34: Application program execution processing part
- 35: Reservation video recording priority specifying part
- 36: Flag storing part
- 37: Reservation video recording notification controlling part
- 100: Communication system

## Claims

1. A mobile communication terminal that enables a TV broadcast to be watched and can start video recording of the TV broadcast at a preliminarily specified time, the mobile communication terminal comprising:
TV broadcast video recording means adapted to video-record said TV broadcast;
application program executing means adapted to execute an application program on a basis of a user operation, the application program being inexecutable simultaneously with a video recording operation for said TV broadcast;
flag storing means adapted to store a reservation video recording priority flag for video-recording said TV broadcast in priority to the execution of said application program;
reservation video recording priority specifying means adapted to enable said reservation video recording priority flag on a basis of a user operation; and
reservation video recording controlling means adapted to specify a video recording start time on a basis of a user operation, and produce a video recording start signal on a basis of said video recording start time, wherein
said TV broadcast video recording means terminates said application program in execution on a basis of said reservation video recording priority flag and said video recording start signal, and starts the video recording of the TV broadcast at said video recording start time.

2. The mobile communication terminal according to claim 1, wherein if said reservation video recording priority flag is enabled, said TV broadcast video recording means terminates said application program a predetermined time period before said video recording start time, and starts the video recording of the TV broadcast at the video recording start time, or if the reservation video recording priority flag is disabled, said TV broadcast video recording means starts the video recording of the TV broadcast upon termination of said application program in execution.

3. The mobile communication terminal according to claim 2, wherein said TV broadcast video recording means terminates said application program said predetermined time period before said video recording start time, and reproduces said TV broadcast.

4. The mobile communication terminal according to claim 1 or 2, comprising:
reservation video recording notifying means adapted to notify start of the video recording a predetermined time period before said video recording start time, wherein
said TV broadcast video recording means starts reproduction of said TV broadcast on a basis of a termination operation for said application program in execution performed from the notification of the start of the video recording by said reservation video recording notifying means to said video recording start time.

5. The mobile communication terminal according to claim 4, wherein
if said application program is not in execution, said TV broadcast video recording means starts the reproduction of said TV broadcast upon the notification of the start of the video recording by said reservation video recording notifying means.

6. The mobile communication terminal according to claim 4 or 5, wherein
a time of notifying of the start of the video recording by said reservation video recording notifying means is before a time when by said TV broadcast video recording means, the application program in execution is terminated and the reproduction of the TV broadcast is started.
